(19) Europäisches Patentamt
European Patent Office
Office européen des brevets

(11) **EP 4 179 622 B1**

(12) **EUROPÄISCHE PATENTSCHRIFT**

(45) Veröffentlichungstag und Bekanntmachung des Hinweises auf die Patenterteilung:
**02.04.2025 Patentblatt 2025/14**

(21) Anmeldenummer: **22737735.5**

(22) Anmeldetag: **09.06.2022**

(51) Internationale Patentklassifikation (IPC):
**H02P 29/64** *(2016.01)* **H02H 7/00** *(2006.01)*

(52) Gemeinsame Patentklassifikation (CPC):
**H02P 29/64; H02H 6/00; H02H 7/085;** H02H 5/04

(86) Internationale Anmeldenummer:
**PCT/DE2022/200115**

(87) Internationale Veröffentlichungsnummer:
**WO 2023/280353 (12.01.2023 Gazette 2023/02)**

(54) **VERFAHREN ZUR ERMITTLUNG DER WICKLUNGSTEMPERATUR EINES ELEKTROMOTORS**

METHOD FOR ASCERTAINING THE WINDING TEMPERATURE OF AN ELECTRIC MOTOR

PROCÉDÉ DE DÉTERMINATION DE LA TEMPÉRATURE D'ENROULEMENT D'UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2021 DE 102021207107**

(43) Veröffentlichungstag der Anmeldung:
**17.05.2023 Patentblatt 2023/20**

(73) Patentinhaber: **ZIEHL-ABEGG SE 74653 Künzelsau (DE)**

(72) Erfinder:
• **KOPP, Lena 74589 Satteldorf (DE)**
• **GLUECK, Alexander 74613 Öhringen (DE)**

(74) Vertreter: **Ullrich & Naumann PartG mbB Schneidmühlstrasse 21 69115 Heidelberg (DE)**

(56) Entgegenhaltungen:
WO-A1-02/087050    WO-A1-2021/106430
DE-A1- 102014 005 706    DE-A1- 102019 201 412
US-A1- 2019 006 967

**Beschreibung**

Die Erfindung betrifft ein Verfahren zur Ermittlung der Wicklungstemperatur eines einen Mikrocontroller (MCU) umfassenden Elektromotors, insbesondere eines Permanentmagnet-Synchronmotors (PMSM), vorzugsweise als Antrieb für einen Ventilator.

Verluste eines Elektromotors bewirken eine Erwärmung der aktiven Teile wie der Wicklung und etwaiger Blechpakete. Die Erhöhung der Wicklungstemperatur verringert die Lebensdauer der Isolierung und kann sogar zum sofortigen Ausfall des Elektromotors führen.

Die Ursache unzulässiger Temperaturerhöhung kann mangelnde Kühlung oder Überlastung sein, wobei eine Überlastung eine erhöhte Stromaufnahme des Elektromotors zur Folge hat. Zulässige Grenzen der Erwärmung können schnell überschritten werden.

Entsprechend ist es von Bedeutung, sowohl im Stillstand wie auch im Betrieb eines Elektromotors die Wicklungstemperatur zu kennen. Diese Kenntnis begünstigt den Zulassungsprozess des Elektromotors und hilft insbesondere im Rahmen der vorausschauenden Instandhaltung die Lebensdauer eines Elektromotors abzuschätzen und unter Zugrundelegung entsprechender Maßnahmen zu verlängern.

Aus der Praxis ist es bekannt, die Wicklungstemperatur eines Elektromotors unter Nutzung eingebauter Temperatursensoren zu ermitteln. Dies ist regelmäßig mit einem hohen messtechnischen Aufwand verbunden und erhöht die Fertigungskosten. Außerdem sind eingebaute Temperatursensoren nur schwer wartbar.

Derzeit ist es auch mit sehr komplexen mathematischen Modellen nur bedingt möglich, die Wicklungstemperatur eines Elektromotors in jedem Betriebspunkt (Stillstand, Normalbetrieb, Feldschwächenbetrieb, etc.) mit der erforderlichen Genauigkeit zu messen. Handelt es sich bei dem Elektromotor um einen Antrieb für einen Ventilator, ist regelmäßig eine sicherheitsrelevante Software vorgesehen, die den Ventilator abschaltet, bevor der Elektromotor einen kritischen Zustand erreicht. Um eine Sicherheitsabschaltung auch ohne die Vorkehrung eines Temperatursensors in der Wicklung sicherzustellen, sind aufwändige Messungen nötig, um indirekt über vorhandene Messgrößen eine Temperaturabschaltung zu ermöglichen.

Die DE102014005706A1 offenbart ein Verfahren zum Betreiben eines Elektromotors mit einem Motortemperaturmodell, das aus einer Ausgangstemperatur und einem Wicklungswiderstand die Wicklungstemperatur ermittelt.

Der Erfindung liegt die Aufgabe zugrunde, ein einfaches Verfahren zur Ermittlung der Wicklungstemperatur eines Elektromotors anzugeben, wonach zusätzliche Sensoren nicht erforderlich sind. Insbesondere soll es möglich sein, die Wicklungstemperatur eines Permanentmagnet-Synchronmotors, der üblicherweise feldorientiert geregelt wird, sowohl im Stillstand als auch im Betrieb des Elektromotors messen zu können. Außerdem soll sich das erfindungsgemäße Verfahren von entsprechenden Verfahren des Wettbewerbs unterscheiden.

Voranstehende Aufgabe ist durch die Merkmale des Anspruchs 1 gelöst. Danach ist das erfindungsgemäße Verfahren dadurch gekennzeichnet, dass die Wicklungstemperatur mithilfe bekannter oder ermittelbarer Parameter des Elektromotors unter Zugrundelegung eines Referenzpunktes aus einer Referenztemperatur und einem Wicklungswiderstand bei der Referenztemperatur ermittelt wird. Kerngedanke der Erfindung ist die Schaffung eines Referenzpunktes, der eine Referenztemperatur und einen Wicklungswiderstand bei der Referenztemperatur umfasst. Ausgehend von diesem Referenzpunkt lässt sich die Wicklungstemperatur unter Berücksichtigung bekannter Parameter ermitteln.

Im Konkreten wird vorausgesetzt, dass vor einer ersten Inbetriebnahme des Elektromotors alle Komponenten die Temperatur der Umgebung haben, wobei es sich dabei schlichtweg um die Umgebungstemperatur der Produktionsstätte handelt. Im Konkreten kann die Temperatur aus einer vorzugsweise kalibrierten Temperaturmessung an der Leistungselektronik (beispielsweise MCU, ZK-Elko, IGBT, etc.) der Wicklungstemperatur gleichgesetzt werden, so dass das Wertepaar aus der Temperatur eines sich auf der Platine befindlichen, kalibrierten Temperatursensors und somit der Wicklungstemperatur und dem auf herkömmliche Weise ermittelbaren Wicklungswiderstand als Referenzpunkt für die weitere Bestimmung der Wicklungstemperatur im Betrieb des Elektromotors dient. An dieser Stelle sei angemerkt, dass die Temperatur nicht zwangsläufig auf der Leistungselektronik gemessen werden muss. Ebenso ist es denkbar, die Raumtemperatur der Produktionsstätte zu verwenden. Sofern sich Temperatursensoren auf den genannten Bauteilen befinden, werden diese Temperatursensoren vorzugsweise genutzt.

Der Wicklungswiderstand lässt sich herkömmlich ermitteln, beispielsweise über ein bekanntes Testverfahren oder über mathematische Modelle.

Als Testverfahren kommen sog. Injektionsverfahren in Frage, wonach elektrische Testimpulse auf die Wicklung gegeben werden, woraus sich der elektrische Widerstand der Wicklung bestimmen lässt.

An dieser Stelle sie noch einmal betont, dass es hier um die Kombination aus dem Wicklungswiderstand und der Temperatur eines auf der Platine befindlichen Temperatursensors (= anfängliche Wicklungstemperatur) geht, wobei dieser Referenzpunkt zur Bestimmung der Wicklungstemperatur im Betrieb des Elektromotors genutzt wird.

Der Referenzpunkt mit seinen beiden Werten kann in einem externen Speicher oder in einem Speicher der MCU abgelegt werden, wobei ein Abgleich des Wicklungswiderstands mit der Temperatur eines auf der Platine befindlichen Temperatursensors und somit der anfänglichen Wicklungstemperatur nur einmal in der Produktion vorgenommen wird, um den Referenzpunkt zu definieren und entsprechend abzulegen. Bei dem externen Speicher kann es sich beispielsweise um einen EEPROM handeln.

Zur andauernden oder periodischen Ermittlung der Wicklungstemperatur kann der Wicklungswiderstand zyklisch nach dem zuvor erörterten bekannten Verfahren, d.h. wie vor der ersten Inbetriebnahme, ermittelt werden. Die Temperaturerhöhung der Wicklung lässt sich über die Änderung des Wicklungswiderstands wie folgt berechnen:

$$\Delta\vartheta = \frac{R - R_{Ref.}}{\alpha \cdot R_{Ref.}},$$

wobei

$\Delta\vartheta$ die Temperaturerhöhung der Wicklung gegenüber der Referenztemperatur,
R der aktuelle Wicklungswiderstand,
$R_{Ref}$ der Wicklungswiderstand vor Inbetriebnahme und
$\alpha$ der materialspezifische Temperaturkoeffizient des Wicklungsmaterials

ist.

Mit Hilfe des Referenzpunktes und unter Zugrundelegung des berechneten Temperaturanstiegs lässt sich somit die aktuelle absolute Wicklungstemperatur ermitteln, und dies zu jedem Zeitpunkt über den Betriebsverlauf hinweg.

Es ist von besonderem Vorteil, die aktuelle Wicklungstemperatur entsprechend den voranstehenden Ausführungen als Parameter für sicherheitstechnische Funktionen zu nutzen, um den Elektromotor in kritischen Betriebspunkten vor Überhitzung zu schützen.

Ebenso ist es denkbar, die aktuelle Wicklungstemperatur als Parameter im Rahmen der vorausschauenden Instandhaltung (Predictive Maintenance) zu nutzen, beispielsweise um Aufschluss über das Betriebsverhalten des Elektromotors zu erhalten und um mögliche Schäden oder Ausfälle des Elektromotors ggf. aufgrund thermischer Belastung abschätzen oder sogar vorhersagen zu können.

Wie bereits zuvor ausgeführt, lässt sich die Kenntnis um die Wicklungstemperatur über den Betriebsverlauf hinweg auch im Zulassungsprozess nutzen, um diesen in Bezug auf die Kenntnis um die Wicklungstemperatur zu begünstigen und den Prozess zu beschleunigen.

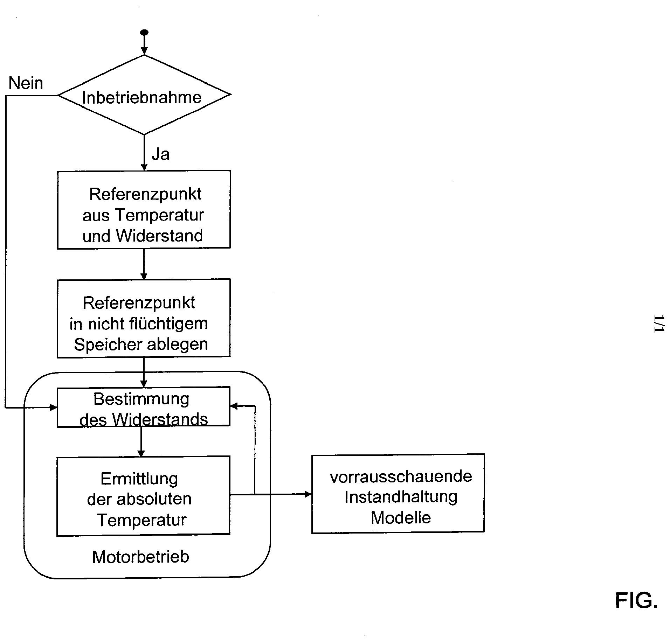

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige Figur in einem schematischen Ablaufdiagramm den grundsätzlichen Ablauf des erfindungsgemäßen Verfahrens zur Nutzung im Rahmen einer vorausschauenden Instandhaltung.

Gemäß der einzigen Figur wird vorausgesetzt, dass der zuvor erörterte Referenzpunkt, umfassend die Wicklungstemperatur und den Wicklungswiderstand vor einer ersten Inbetriebnahme, ermittelt worden ist. Der Referenzpunkt ist/wird in einem nicht flüchtigen Speicher abgelegt, beispielsweise in einem Speicher der MCU.

Während des Motorbetriebs wird auf herkömmliche Wiese der Wicklungswiderstand ermittelt, beispielsweise über ein sog. Injektionsverfahren mittels Testimpulsen oder über sogenannte Parameterschätzer. Es lässt sich entsprechend den voranstehenden Ausführungen im allgemeinen Teil der Beschreibung die aktuelle absolute Wicklungstemperatur ermitteln. Dieser Wert lässt sich beispielsweise zur vorausschauenden Instandhaltung (Predictive Maintenance) nutzen und kann einem entsprechenden Modell zugeführt werden.

**Patentansprüche**

1. Verfahren zur Ermittlung der Wicklungstemperatur eines einen Mikrocontroller (MCU) umfassenden Elektromotors, insbesondere eines Permanentmagnet- Synchronmotors (PMSM), vorzugsweise als Antrieb für einen Ventilator, wobei die Wicklungstemperatur mithilfe bekannter oder ermittelbarer Parameter des Elektromotors unter Zugrundelegung eines Referenzpunktes aus einer Referenztemperatur und einem Wicklungswiderstand bei der Referenztemperatur ermittelt wird,
**dadurch gekennzeichnet, dass** vorausgesetzt wird, dass vor einer ersten Inbetriebnahme die Wicklungstemperatur der Umgebungstemperatur der Fertigung entspricht, wobei die Temperatur aus einer Temperaturmessung an dem Mikrocontroller der Wicklungstemperatur in etwa gleichgesetzt wird.

2. Verfahren nach Anspruch 1, **dadurch gekennzeichnet, dass** die Temperatur aus einer kalibrierten Temperaturmessung an dem Mikrocontroller der Wicklungstemperatur in etwa gleichgesetzt wird.

3. Verfahren nach Anspruch 1 oder 2, **dadurch gekennzeichnet, dass** der Wicklungswiderstand vorzugsweise über Testverfahren oder mathematische Modelle bestimmt wird, wobei das Wertepaar aus Wicklungswiderstand und Wicklungstemperatur (= Umgebungstemperatur in der Fertigung, die mit Hilfe des MCU gemessen wird) als Referenzpunkt für die Bestimmung der Wicklungstemperatur im Betrieb des Elektromotors dient.

**4.** Verfahren nach Anspruch 3, **dadurch gekennzeichnet, dass** der Wicklungswiderstand, beispielsweise über ein Injektionsverfahren, ermittelt wird, wonach elektrische Impulse auf die Wicklung gegeben werden.

**5.** Verfahren nach Anspruch 3 oder 4, **dadurch gekennzeichnet, dass** der Referenzpunkt in einem externen Speicher oder einem nicht flüchtigen Speicher des Mikrocontrollers abgelegt wird, wobei ein Abgleich des Wicklungswiderstands mit der Temperatur eines auf der Platine befindlichen Temperatursensors und somit der Wicklungstemperatur lediglich einmal in der Produktion vorgenommen wird, um den Referenzpunkt zu definieren.

**6.** Verfahren nach Anspruch 5, **dadurch gekennzeichnet, dass** während des Betriebs des Elektromotors, beispielsweise zyklisch, vorzugsweise mit dem gleichen Verfahren wie vor der ersten Inbetriebnahme, der Wicklungswiderstand ermittelt wird, wobei die Temperaturerhöhung der Wicklung über die Änderung des Wicklungswiderstands wie folgt berechnet wird:

$$\Delta\vartheta = \frac{R - R_{Ref.}}{\alpha \cdot R_{Ref.}},$$

ist, wobei

$\Delta\vartheta$ die Temperaturerhöhung der Wicklung gegenüber der Referenztemperatur,
R der aktuelle Wicklungswiderstand,
$R_{Ref}$ der Wicklungswiderstand vor Inbetriebnahme und
$\alpha$ der materialspezifische Temperaturkoeffizient des Wicklungsmaterials, wobei mithilfe des Referenzpunktes und unter Zugrundelegung des berechneten Temperaturanstiegs die aktuelle absolute Wicklungstemperatur ermittelt wird.

**7.** Verfahren nach einem der Ansprüche 1 bis 6, **dadurch gekennzeichnet, dass** die aktuelle Wicklungstemperatur als Parameter für sicherheitstechnische Funktionen genutzt wird, um den Elektromotor in kritischen Betriebspunkten vor Überhitzung zu schützen.

**8.** Verfahren nach einem der Ansprüche 1 bis 7, **dadurch gekennzeichnet, dass** die aktuelle Wicklungstemperatur als Parameter im Rahmen der vorausschauenden Instandhaltung (Predictive Maintenance) genutzt wird, beispielsweise um Aufschluss über das Betriebsverhalten des Elektromotors zu erhalten und um mögliche Schäden oder Ausfälle des Elektromotors aufgrund thermischer Belastung abschätzen bzw. vorhersagen zu können.

## Claims

**1.** Method for establishing the winding temperature of an electric motor which comprises a microcontroller (MCU), in particular a permanent magnet synchronous motor (PMSM), preferably acting as a drive for a fan, wherein the winding temperature is established using parameters of the electric motor which are known or can be established taking as a basis a reference point from a reference temperature and a winding resistance at the reference temperature, **characterised in that** it is required that prior to a first start-up the winding temperature corresponds to the ambient temperature of the production, wherein the temperature from a temperature measurement at the microcontroller is substantially equated to the winding temperature.

**2.** Method according to claim 1, **characterised in that** the temperature from a calibrated temperature measurement at the microcontroller is substantially equated to the winding temperature.

**3.** Method according to claim 1 or claim 2, **characterised in that** the winding resistance is determined preferably by means of test methods or mathematical models, wherein the value pair comprising the winding resistance and winding temperature (= ambient temperature in the production which is measured using the MCU) acts as the reference point for determining the winding temperature during operation of the electric motor.

**4.** Method according to claim 3, **characterised in that** the winding resistance is established, for example, via an injection method, according to which electrical pulses are applied to the winding.

**5.** Method according to claim 3 or 4, **characterised in that** the reference point is stored in an external memory or a nonvolatile memory of the microcontroller, wherein a comparison of the winding resistance with the temperature of a temperature sensor located on the printed circuit board and consequently the winding temperature is carried out only once during production in order to define the reference point.

**6.** Method according to claim 5, **characterised in that** during the operation of the electric motor, for example, cyclically, preferably using the same method as before the first start-up, the winding resistance is established, wherein the temperature increase of the winding over the change of the winding resistance is calculated as follows:

$$\Delta\vartheta = \frac{R - R_{Ref.}}{\alpha \cdot R_{Ref.}},$$

where $\Delta\vartheta$ is the temperature increase of the winding with respect to the reference temperature,

R is the current winding resistance,

$R_{Ref}$ is the winding resistance before start-up, and

$\alpha$ is the material-specific temperature coefficient of the winding material,

wherein, by means of the reference point and taking as a basis the calculated temperature increase, the current absolute winding temperature is established.

7. Method according to any one of claims 1 to 6, **characterised in that** the current winding temperature is used as a parameter for technical safety functions in order to protect the electric motor from overheating at critical operating points.

8. Method according to any one of claims 1 to 7, **characterised in that** the current winding temperature is used as a parameter in the context of predictive maintenance, for example, in order to obtain information relating to the operating behaviour of the electric motor and in order to be able to estimate or predict possible damage or failures of the electric motor as a result of thermal loading.

**Revendications**

1. Procédé de détermination de la température d'enroulement

d'un moteur électrique comprenant un microcontrôleur (MCU), en particulier d'un moteur synchrone à aimant permanent (PMSM), de préférence comme entraînement pour un ventilateur, la température d'enroulement étant déterminée à l'aide de paramètres connus du moteur électrique ou pouvant être déterminés en se basant sur un point de référence constitué d'une température de référence et d'une résistance d'enroulement lorsque la température de référence est atteinte,

**caractérisé en ce qu'**il est supposé qu'avant une première mise en service, la température d'enroulement correspond à la température ambiante de fabrication, la température issue d'une mesure de température sur le microcontrôleur étant à peu près égale à la température d'enroulement.

2. Procédé selon la revendication 1, **caractérisé en ce que** la température

issue d'une mesure de température calibrée sur le microcontrôleur est à peu près égale à la température d'enroulement.

3. Procédé selon la revendication 1 ou 2, **caractérisé en ce que**

la résistance d'enroulement est déterminée de préférence par des procédés de test ou des modèles mathématiques, le couple de valeurs issu de la résistance d'enroulement et de la température d'enroulement (= température ambiante de fabrication mesurée à l'aide du MCU) servant de point de référence pour la détermination de la température d'enroulement pendant le fonctionnement du moteur électrique.

4. Procédé selon la revendication 3, **caractérisé en ce que** la résistance d'enroulement est déterminée, par exemple par un procédé d'injection, après quoi des impulsions électriques sont appliquées à l'enroulement.

5. Procédé selon la revendication 3 ou 4, **caractérisé en ce que** le point de référence est enregistré dans une mémoire externe ou dans une mémoire non volatile du microcontrôleur, une comparaison de la résistance d'enroulement avec la température affichée par un capteur de température situé sur le circuit imprimé, et donc avec la température d'enroulement, étant effectuée une seule fois en production pour définir le point de référence.

6. Procédé selon la revendication 5, **caractérisé en ce que** la résistance d'enroulement est déterminée pendant le fonctionnement du moteur électrique, par exemple de manière cyclique, de préférence avec le même procédé qu'avant la première mise en service, l'augmentation de la température d'enroulement étant calculée sur la variation de la résistance d'enroulement comme suit :

$$\Delta\vartheta = \frac{R - R_{Ref.}}{\alpha \cdot R_{Ref.}},$$

où

$\Delta\vartheta$ est l'augmentation de la température d'enroulement par rapport à la température de référence,

R est la résistance d'enroulement actuelle,

$R_{Ref}$ est la résistance d'enroulement avant la mise en service et

$\alpha$ est le coefficient de température spécifique du matériau d'enroulement,

la température absolue actuelle d'enroulement étant déterminée à l'aide du point de référence et en se basant sur l'augmentation de température calculée.

7.   Procédé selon l'une des revendications 1 à 6, **caractérisé en ce que** la température actuelle d'enroulement est utilisée comme paramètre pour des fonctions de sécurité techniques afin de protéger le moteur électrique contre la surchauffe en des points de fonctionnement critiques.

8.   Procédé selon l'une des revendications 1 à 7, **caractérisé en ce que** la température actuelle d'enroulement est utilisée comme paramètre dans le cadre de la maintenance prédictive (predictive maintenance), par exemple pour obtenir des informations sur le comportement de fonctionnement du moteur électrique et pour estimer ou prévoir des dommages ou des pannes éventuels du moteur électrique en raison de la charge thermique.

FIG.

Inbetriebnahme

Ja

Nein

Referenzpunkt aus Temperatur und Widerstand

Referenzpunkt in nicht flüchtigem Speicher ablegen

Bestimmung des Widerstands

Ermittlung der absoluten Temperatur

Motorbetrieb

vorrausschauende Instandhaltung Modelle

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014005706 A1